# EUROPÄISCHE PATENTSCHRIFT

(11) **EP 1 285 811 B1**
(45) Veröffentlichungstag und Bekanntmachung des Hinweises auf die Patenterteilung: **30.08.2006**
(21) Anmeldenummer: 02016056.0
(22) Anmeldetag: 19.07.2002
(51) Int. Cl.: B60Q 1/00

(54) **Scheinwerfer für Fahrzeuge**
Headlight for vehicle
Projecteur pour véhicule

(30) Priorität: 16.08.2001 DE 10140277
(43) Veröffentlichungstag der Anmeldung: 26.02.2003
(73) Patentinhaber: Hella KGaA Hueck & Co., 59552 Lippstadt (DE)
(72) Erfinder: Kalze, Franz-Josef, 33428 Harsewinkel (DE); Schmidt, Christian, 59955 Winterberg (DE); Grimm, Martin, 59597 Erwitte (DE)

(56) Entgegenhaltungen:
- EP-A- 0 990 558
- EP-A- 0 999 094
- PATENT ABSTRACTS OF JAPAN Bd. 009, Nr. 231 (M-414), 18. September 1985 (1985-09-18) -& JP 60 088650 A (NISSAN JIDOSHA KK), 18. Mai 1985 (1985-05-18)
- PATENT ABSTRACTS OF JAPAN Bd. 1996, Nr. 07, 31. Juli 1996 (1996-07-31) -& JP 08 064011 A (ICHIKOH IND LTD), 8. März 1996 (1996-03-08)

## Beschreibung

Die Erfindung betrifft einen Scheinwerfer für Fahrzeuge mit einem Projektionsmodul, das einen Reflektor und eine in seinen Strahlengang angeordnete Linse umfasst, mit einem seitlich des Projektionsmoduls angeordneten Lichtmodul, zu dessen Lichtaustrittsfläche die Linse zur Rückseite des Scheinwerfers zurückversetzt angeordnet ist, und mit einem schalenförmigen Kurvenlichtreflektor.

Ein solcher Scheinwerfer für Fahrzeuge ist aus der EP 0 990 558 A2 bekannt. Der Scheinwerfer weist ein aus Kunststoff bestehendes topfförmiges Gehäuse auf, dessen vordere Öffnung durch eine lichtdurchlässige Abschlussscheibe abgeschlossen ist. Im Inneren des Gehäuses ist ein Projektionsmodul für Abblendlicht angeordnet. Das Projektionsmodul weist einen Reflektor, eine Linse und eine zwischen Linse und Reflektor angeordnete Blende auf. Seitlich neben dem Projektionsmodul ist ein schalenförmiger Reflektor eines Lichtmoduls für Fernlicht angeordnet. Die Linse des Projektionsmoduls ist gegenüber der Lichtaustrittsöffnung des Lichtmoduls zur Rückseite des Scheinwerfers versetzt angeordnet. Das Projektionsmodul und das Lichtmodul sind von einem Abdeckrahmen umgeben, der für einen Betrachter die Sicht in das Innere des Scheinwerfers abschirmt. Oberhalb des Projektionsmoduls ist ein schalenförmiger Kurvenlichtreflektor angeordnet, in dessen Brennort eine Lichtquelle des Projektionsmodul liegt. Der schalenförmige Kurvenlichtreflektor bündelt Licht der Lichtquelle und ein zwischen dem Projektionsmodul und Lichtmodul angeordneter Spiegel lenkt das gebündelte Licht zur Fahrzeugseite hin. Durch den oberhalb des Abblendlicht-Reflektors des Projektionsmoduls angeordneten schalenförmigen Kurvenlichtreflektor baut das Projektionsmodul und somit auch der Scheinwerfer größer und ein großer Reflexionsabschnitt im oberen Bereich des Abblendlicht-Reflektors entfällt und kann nicht genutzt werden.

Aufgabe der Erfindung ist es, den im Oberbegriff beschriebenen Scheinwerfer für Fahrzeuge derart zu verbessern, dass der Scheinwerfer möglichst klein baut und trotzdem der Kurvenlichtreflektor eine möglichst große nutzbare Reflexionsfläche aufweist. Diese Aufgabe wird nach der Erfindung dadurch gelöst, dass
- der schalenförmige Kurvenlichtreflektor zwischen dem Projektions- und Lichtmodul angeordnet ist,
- der schalenförmige Kurvenlichtreflektor für ein Lichtelement eine Aufnahme aufweist, die zu einem der Linse benachbarten Bauteil des Projektionsmoduls hin näher beanstandet ist als zur Lichtaustrittflache des Lichtmoduls,
- der schalenförmige Kurvenlichtreflektor mit einem ersten Randabschnitt seiner Reflexionsfläche zum die Linse aufnehmenden vorderen Endbereich des Projektionsmoduls und mit einem zweiten Randabschnitt seiner Reflexionsfläche in Lichtaustrittsrichtung des Lichtmoduls weist.

Wegen der nahen Lage der für das Lichtelement dienenden Aufnahme verbleibt zwischen der Aufnahme des Lichtelements und dem der Lichtaustrittsfläche des Lichtmoduls benachbarten Reflektorrand ein Reflexionsbereich, der zur Erzeugung des Kurvenlichts optimal ausgerichtet ist und trotz des engen Bauraums zwischen dem Lichtmodul und dem Projektionsmodul großflächig ausführbar ist. Weiterhin nutzt der Kurvenlichtreflektor den engen Bauraum vorteilhaft aus, wenn der Kurvenlichtreflektor mit dem ersten Randabschnitt so nahe zum Lichtmodul angeordnet ist, dass zwischen dem Kurvenlichtreflektor und dem Lichtmodul ein enger Durchgang besteht und das Projektionsmodul mit dem der Linse benachbarten Bauteil einer Einbuchtung des Kurvenlichtreflektor zugeordnet ist bzw. zwischen dem der Linse benachbarten äußeren Randbereich des Kurvenlichtreflektors und dem Projektionsmodul ein bogenförmiger Spalt besteht.

Weiterhin ist vorteilhaft, wenn der schalenförmige Kurvenlichtreflektor mit einem Abschnitt innerhalb einer in Lichtaustrittsrichtung liegenden Projektionsfläche eines Bauteils (wie zum Beispiel der Reflektor oder ein die Linse umgebender Abdeckrahmen) des Projektionsmoduls angeordnet ist. Dadurch ist bedingt durch die Bauform des Projektionsmoduls, dessen Linse einen kleineren Außendurchmesser auf als der Reflektor des Projektionsmoduls aufweist, der Raum für den Kurvenlichtscheinwerfer zwischen dem Lichtmodul und dem Projektionsmodul optimal ausnutzbar. Der Kurvenlichtscheinwerfer und das Projektionsmodul sind ineinander verschachtelt angeordnet.

Die optische Achse des Kurvenlichtreflektors weist einen feststehenden spitzen Winkel zur optischen Achse des Projektionsscheinwerfer auf und dient somit zur Erzeugung eines statischen Kurvenlichts. Das Projektionsmodul dient zur Erzeugung mindestens einer Abblendlichtfunktion, während das Lichtmodul zur Erzeugung von Fernlicht dient. Das statische Kurvenlicht dient zur Ausleuchtung eines Seitenbereich direkt vor und seitlich neben dem Fahrzeug. Durch die nahe Anordnung des Kurvenlichtreflektors zum Projektionsmodul ist für den Begegnungsverkehr eine Veränderung in der Intensität des zugeschalteten Kurvenlichts nicht zu erkennen. In diesem Zusammenhang ist es weiterhin vorteilhaft, wenn das Projektions- und Lichtmodul von einem Abdeckrahmen umgeben sind, der einen zwischen Kurvenlichtreflektor und Lichtmodul verlaufenden Steg aufweist, der von der vorderen Seite des Scheinwerfers her gesehen so breit ausgeführt ist, dass er zumindest einen zum Lichtmodul benachbarten Reflexionsabschnitt des Kurvenlichtreflektors und einen Abschnitt der Aufnahme des Lichtelements des Kurvenlichtreflektors abschirmt.

Durch den schrägen Verlauf der optischen Achse des Kurvenlichtreflektors zur optischen Achse des Projektionsmoduls sind die von dem Kurvenlichtreflektor reflektierten Lichtstrahlen zur Fahrzeugaußenseiten hin gerichtet. Das statische Kurvenlicht wird in Abhängigkeit des Kurvenradius eingeschaltet. Die Bestimmung des Kurvenradius erfolgt durch die Verwendung einer oder mehrerer Parameter, wie zum Beispiel: Gierrate des Fahrzeugs, Lenkwinkel des Fahrzeugs, bildgebende Sensorik, GPS-Daten. Zusätzlich können ein Fahrtrichtungsanzeiger und ein Rückfahrsignal einen Einfluss auf Ansteuerungsalgorithmen nehmen. Die Einschaltung des statischen Kurvenlichts erfolgt bei der Überschreitung einer Grenzschwelle eines Kurvenradius.

Der Kurvenlichtreflektor und somit sein ihm zugeordnetes Lichtelement ist von der Rückseite des Scheinwerfers problemlos zugänglich, wenn die Aufnahme des Kurvenlichtreflektors eine Reflektoröffnung ist, dessen Mittelachse schräg zur optischen Achse des Projektionsmoduls und zwischen dem Projektionsund Lichtmodul hindurch verläuft. Hierbei fällt die Mittelachse des Lichtelements mit der Mittelachse der Reflektoröffnung zusammen. In diesem Zusammenhang ist es weiterhin vorteilhaft, wenn einer von der Rückseite des Kurvenlichtreflektors abstehenden Fassungsaufnahme des Lichtelements ein schalenförmiger Reflektor des Lichtmoduls mit einem entgegen der Lichtaustrittsrichtung gerichteten Reflektorabschnitt zugewandt ist. Dadurch ist auch eine große Fassungsaufnahme verwendbar.

Der Kurvenlichtreflektor ist entweder starr mit dem Projektionsmodul oder dem Lichtmodul verbunden.

Ein weiterer Vorteil ist es, wenn dem Lichtelement ein Abdeckelement zur Abschirmung von direkt aus dem Lichtelement austretenden Lichtstrahlen zugeordnet ist. Die Abdeckelement kann von einem geschwärzten vorderen Bereich eines Glaskolbens des Lichtelements oder von einer separaten Teil gebildet sein.

Bei einer besonders vorteilhaften Weiterbildung der Erfindung ist das Projektionsmodul um eine vertikale Achse für dynamisches Kurvenlicht schwenkbar, wobei das statische Kurvenlicht bei engen Kurvenradien dem dynamischen Kurvenlicht zuschaltbar ist. Um mit dem Projektionsmodul dynamisches Kurvenlicht zu erzeugen, ist dieses mit einer Steuereinrichtung verbunden, die das Projektionsmodul in Abhängigkeit des Kurvenradius in einem vorbestimmten Winkelbereich schwenkt. Die Grenzschwelle des Kurvenradius zur Einschaltung des statischen Kurvenlichts ist vorteilhaft gewählt, wenn sie bei der Kombination mit einem dynamischen (schwenkenden) Kurvenlicht noch in dem Bewegungsbereich des dynamischen Kurvenlichts liegt oder sich an diesen Wirkbereich anschließt. Die Deaktivierung des statischen Kurvenlichts erfolgt mit einer Hysterese d.h. das statische Kurvenlicht wird bei einem Kurvenradius wieder ausgeschaltet, der größer ist als bei der zur Einschaltung des Kurvenlichts dienenden Grenzschwelle.
Im Falle der Rückwärtsfahrt wird die Ansteuerung des statischen Kurvenlichts invertiert, d.h. bei Linkseinschlag der Lenkrades wird der rechte Kurvenscheinwerfer aktiviert, während bei Rechtseinschlag des Lenkrades der linke Kurvenscheinwerfer aktiviert wird. Alternativ kann bei Rückwärtsfahrt eine beidseitige Aktivierung des statischen Kurvenlichts erfolgen.
Weiterhin ist es vorteilhaft, wenn die Einschaltung des statischen Kurvenlichts mit einer definierten Dimmrampe und die Deaktivierung des statischen Kurvenlichts mit einer bestimmten Dimmgeschwindigkeit erfolgt, die von der Einschaltcharakteristik abweichen kann.

Ein Ausführungsbeispiel nach der Erfindung ist in der Zeichnung dargestellt und zwar zeigen
Figur 1 eine Vorderansicht auf einen Scheinwerfer für Fahrzeuge mit einem zwischen einem Projektionsmodul für Abblendlicht und einem Lichtmodul für Fernlicht angeordneten Kurvenlichtreflektor für statisches Kurvenlicht,
Figur 2 einen horizontalen mittleren Längsschnitt durch den Scheinwerfer nach Figur 1, während die
Figuren 3 und 4 eine andere Ausführung eines Scheinwerfers für Fahrzeuge zeigen.

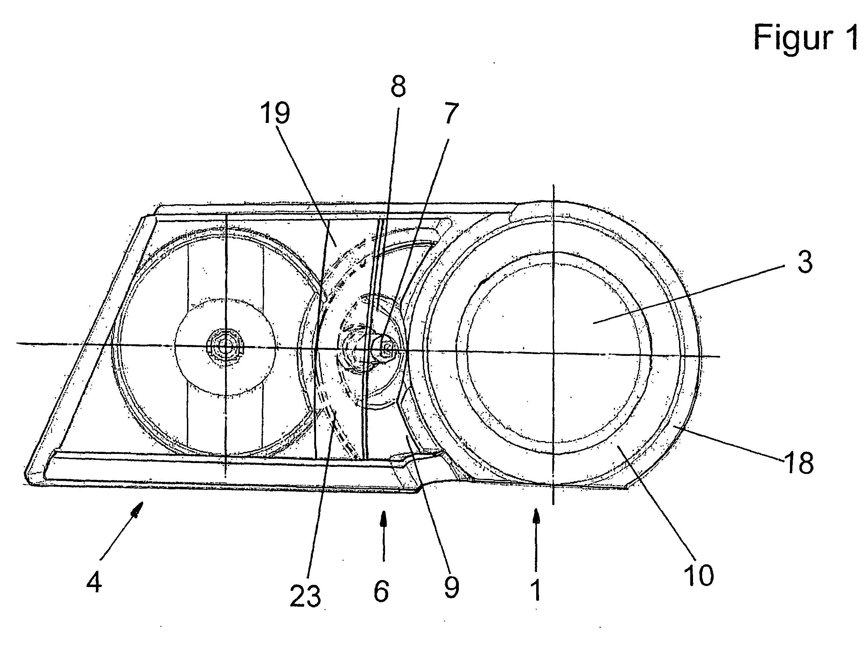

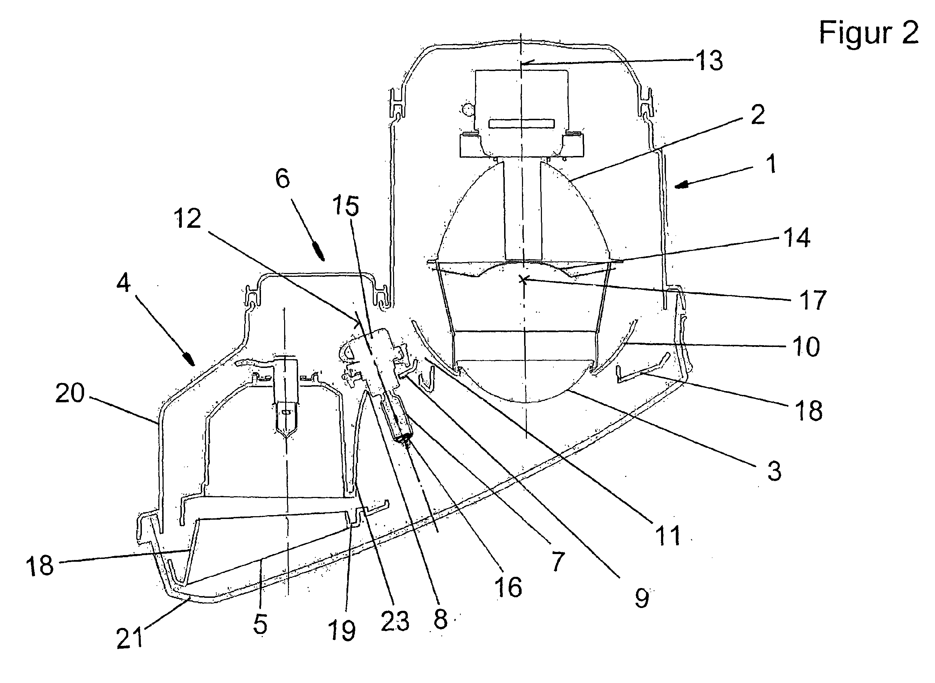

Der Scheinwerfer für Fahrzeuge nach den Figuren 1 und 2 weist ein aus Kunststoff bestehendes topfförmiges Gehäuse 20 auf, dessen vordere Öffnung durch eine lichtdurchlässige Abschlussscheibe 21 abgeschlossen ist. In dem von Gehäuse 20 und Abschlussscheibe 21 gebildeten Scheinwerferinneren ist ein Lichtmodul 4 für Fernlicht, ein Projektionsmodul 1 für Abblendlicht und dynamisches Kurvenlicht und ein schalenförmiger Kurvenlichtreflektor 6 für statisches Kurvenlicht angeordnet. Das Projektionsmodul 1 besteht aus einem ellipsenförmigen Reflektor 2, einer Linse 3 und einer zwischen Reflektor 2 und Linse 3 angeordneten Blende 14. Das Projektionsmodul 1 ist um eine vertikale Achse 17 schwenkbar. Um mit dem Projektionsmodul 1 dynamisches Kurvenlicht zu erzeugen, ist dieses mit einer Steuereinrichtung (nicht dargestellt) verbunden, die das Projektionsmodul 1 in Abhängigkeit des Kurvenradius in einem vorbestimmten Winkelbereich um die vertikale Achse 17 schwenkt. Der Winkelbereich ist vorzugsweise etwa 30° groß. Die vertikale Achse 17 ist in der Nähe des vorderen Randes des Reflektor 2 angeordnet. Die Linse ist von einem rahmenartigen Bauteil 10 umgeben, das mit dem inneren Randbereich an einem die Linse 3 aufnehmenden Halter befestigt ist. Das rahmenartige Bauteil 10 ist kreisringförmig ausgebildet und weist auf seiner Vorderseite eine kugelförmigen Flächenabschnitt auf, dessen Mittelpunkt auf dem Schnittpunkt von der vertikalen Achse 17 und der optischen Achse 13 liegt. Die Linse 3 des Projektionsmoduls 1, das Lichtmodul 4 und den Kurvenlichtreflektor 6 sind von einem Abdeckrahmen 18 umgeben, der für einen Betrachter den Blick in das Scheinwerferinnere abschirmt. Der Abdeckrahmen 18 umgibt die Linse 2 in einem Abstand, ist umlaufend zu dem rahmenartigen Bauteil 10 des Projektionsmoduls 1 beabstandet und deckt umlaufend den äußeren Randbereich des rahmenartigen Bauteils 10 ab.

Das Lichtmodul 4 besteht aus einem schalenförmigen Reflektor, dem eine Lichtquelle zugeordnet ist und mit dem der Kurvenlichtreflektor 6 einstückig ausgeführt ist. Eine vordere Lichtaustrittsfläche 5 des Lichtmoduls 4 ist gegenüber der Linse 3 des Projektionsmoduls 1 zur Abschlussscheibe 21 hin versetzt angeordnet. Zwischen der Linse 3 des Projektionsmoduls 1 und der Lichtaustrittfläche 5 des Lichtmoduls 4 erstreckt sich der schalenförmige Kurvenlichtreflektor 6 mit seiner Reflexionsfläche. Die optische Achse 12 des Kurvenlichtreflektors 6 verläuft in einem spitzen Winkel α zur optischen Achse des Projektionsmoduls 1 und zwischen der Lichtaustrittfläche 5 des Lichtmoduls 4 und der Linse 3 hindurch. Der Kurvenlichtreflektor 6 weist eine als Aufnahme 8 dienende Reflektoröffnung für ein Lichtelement 7, welches eine Glühlampe ist, auf. Die Aufnahme 8 weist zur Linse 3 hin einen kleineren Abstand als zur Lichtaustrittsfläche 5 des Lichtmoduls 4 auf. Der schalenförmige Kurvenlichtreflektor 6 weist mit einem ersten Randabschnitt 9 seiner Reflexionsfläche zum die Linse 3 aufnehmenden vorderen Endbereich des Projektionsmoduls 1 und mit einem zweiten Randabschnitt 23 seiner Reflexionsfläche in Lichtaustrittsrichtung des Lichtmoduls 4 weist. Die Mittelachse 12 der Aufnahme 8 bzw. des Lichtelements 7 verläuft in einem spitzen Winkel α zur optischen Achse 13 des Projektionsmoduls 1 und zwischen dem Projektionsmodul 1 und dem Lichtmodul 4 hindurch. Das Lichtelement 7 weist einen zur Abschlussscheibe 21 hin gerichteten Glaskolben auf, dessen freies Ende durch eine dunkle Beschichtung mit einem Abdeckelement 18 versehen ist. Das Abdeckelement 18 schirmt direkt aus dem Lichtelement 7 austretenden Lichtstrahlen ab. Das Projektionsmodul 1 ist mit einem Abschnitt des rahmenartigen Bauteils 10 in einer Einbuchtung 11 des Kurvenlichtreflektors 6 angeordnet, während ein die Einbuchtung 11 begrenzender bogenförmiger äußerer Randbereich des Kurvenlichtreflektors 6 innerhalb einer in Lichtaustrittsrichtung liegenden Projektionsfläche der rahmenartigen Bauteils 10 des Projektionsmoduls 1 angeordnet ist. Dabei besteht zwischen dem bogenförmigen äußeren Randbereich des Kurvenlichtreflektors 6 und dem rahmenartigen Bauteils 10 ein bogenförmiger Spalt. Das Lichtelement 7 ist mit einem Sockel in eine Fassungsaufnahme 15 eingesetzt, die auf der Rückseite des Kurvenlichtreflektor 6 angeordnet ist, wobei der Kurvenlichtreflektor 6 mit der zur Scheinwerferrückseite hin weisenden Seite der Fassungsaufnahme 15 zugewandt ist. Das Projektionsmodul 1 und das Lichtmodul 4 sind von einem Abdeckrahmen 18 umgeben, der einen zwischen Kurvenlichtreflektor 6 und Lichtmodul 4 verlaufenden bogenförmigen_Steg 19 aufweist, der von der vorderen Seite des Scheinwerfers her gesehen so breit ausgeführt ist, dass er zumindest einen zum Lichtmodul 4 benachbarten Reflexionsabschnitt des Kurvenlichtreflektors 6 und einen Abschnitt der Aufnahme des Lichtelements 7 des Kurvenlichtreflektors 6 abschirmt. Der bogenförmige Steg 19 ist mit seinem Bogen zur Linse 3 hin geöffnet. Der Abdeckrahmen 18 weist eine dem Lichtmodul 4 zugeordnete Öffnung auf, die als Lichtaustrittsfläche 5 für das Lichtmodul 4 dient.

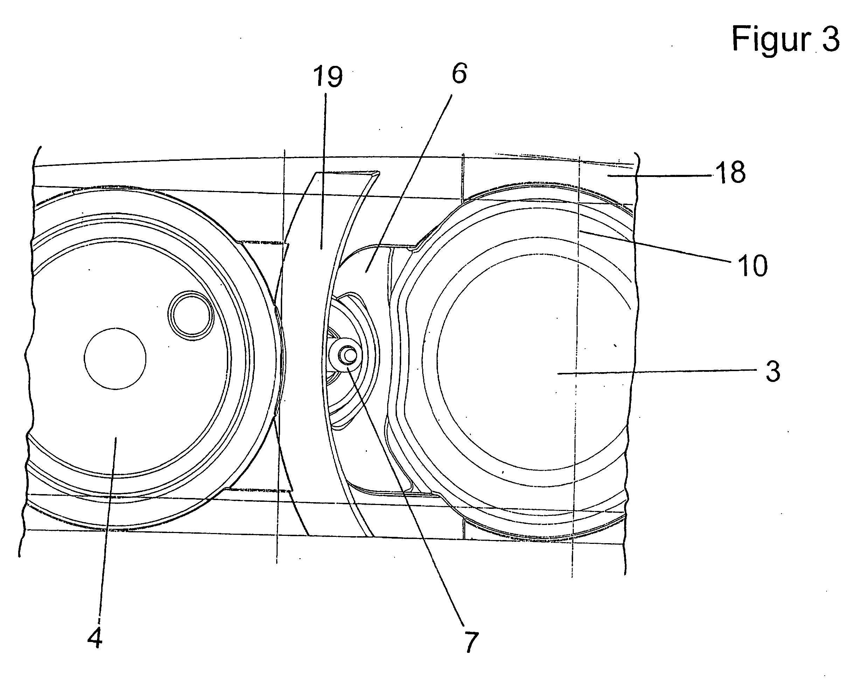

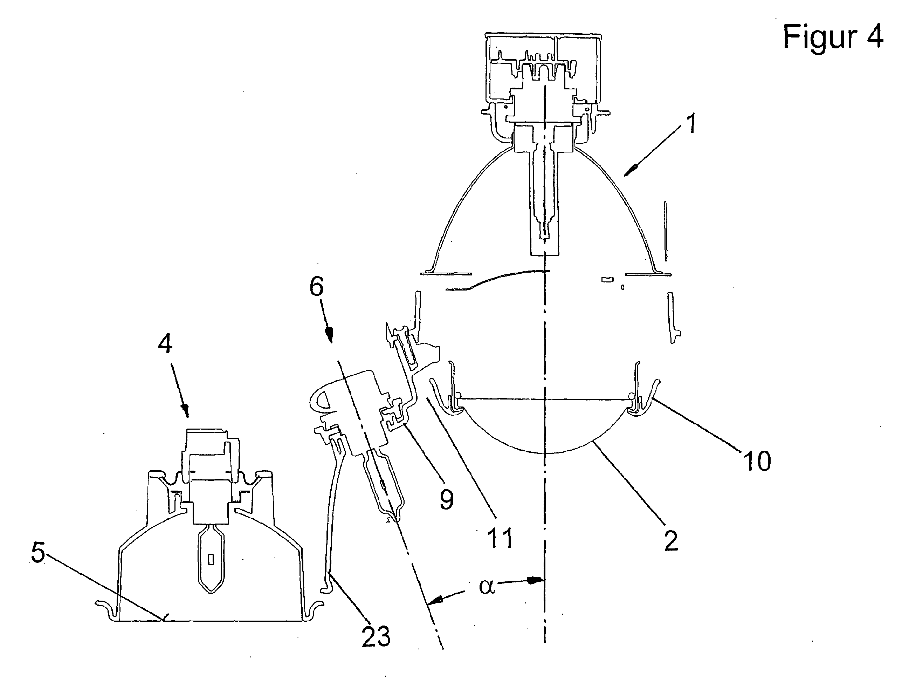

Bei dem in Figuren 3 und 4 dargestellten Scheinwerfer für Fahrzeuge das Projektionsmodul 1 keine dynamische Kurvenlichtfunktion auf und der Kurvenlichtreflektor 6 ist mit einem äußeren Randbereich an einem das Projektionsmodul 1 halternden Trägerelement 22 befestigt.

### Bezugszeichen:

- 1.: Projektionsmodul
- 2.: Reflektor
- 3.: Linse
- 4.: Lichtmodul
- 5.: Lichtaustrittsfläche
- 6.: Kurvenlichtreflektor
- 7.: Lichtelement
- 8.: Aufnahme
- 9.: erste Randabschnitt
- 10.: Bauteil
- 11.: Einbuchtung
- 12.: optische Achse
- 13.: optische Achse
- 14.: Blende
- 15.: Fassungsaufnahme
- 16.: Abdeckelement
- 17.: vertikale Achse
- 18.: Abdeckrahmen
- 19.: Steg
- 20.: Gehäuse
- 21.: Abschlussscheibe
- 22.: Trägerelement
- 23.: zweite Randabschnitt

## Patentansprüche

1. Scheinwerfer für Fahrzeuge mit einem Projektionsmodul (1), das einen Reflektor (2) und eine in seinen Strahlengang angeordnete Linse (3) umfasst, mit einem seitlich des Projektionsmoduls (1) angeordneten Lichtmodul (4), zu dessen Lichtaustrittsfläche (5) die Linse (3) zur Rückseite des Scheinwerfers zurückversetzt angeordnet ist, und mit einem schalenförmigen Kurvenlichtreflektor (6), **dadurch gekennzeichnet, dass**
- der schalenförmige Kurvenlichtreflektor (6) zwischen dem Projektions- und Lichtmodul (1 und 4) angeordnet ist,
- der schalenförmige Kurvenlichtreflektor (6) für ein Lichtelement (7) eine Aufnahme (8) aufweist, die zu einem der Linse (3) benachbarten Bauteil (10) des Projektionsmoduls (1) hin näher beanstandet ist als zur Lichtaustrittflache (5) des Lichtmoduls (4),
- der schalenförmige Kurvenlichtreflektor (6) mit einem ersten Randabschnitt (9) seiner Reflexionsfläche zum die Linse (3) aufnehmenden vorderen Endbereich des Projektionsmoduls (1) und mit einem zweiten Randabschnitt (23) seiner Reflexionsfläche in Lichtaustrittsrichtung des Lichtmoduls (4) weist.

2. Scheinwerfer nach Anspruch 1, **dadurch gekennzeichnet, dass** die optische Achse (12) des Kurvenlichtreflektors (6) in einem spitzen Winkel (α) zur optischen Achse (13) des Projektionsmoduls (1) und zwischen der Lichtaustrittsfläche (5) des Lichtmoduls (4) und dem Projektionsmodul (1) hindurch verläuft.

3. Scheinwerfer nach Anspruch 1 oder 2, **dadurch gekennzeichnet, dass** das Projektionsmodul (1) mit dem der Linse (3) benachbarten Bauteil (10) einer Einbuchtung (11) des Kurvenlichtreflektor (6) zugeordnet ist.

4. Scheinwerfer nach einem der Ansprüche 1 bis 3, **dadurch gekennzeichnet, dass** zwischen dem äußeren Randbereich des Kurvenlichtreflektors (6) und dem Bauteil (10) des Projektionsmoduls (1) ein bogenförmiger Spalt besteht.

5. Scheinwerfer nach einem der Ansprüche 1 bis 4, **dadurch gekennzeichnet, dass** die Aufnahme (8) des Kurvenlichtreflektors (6) eine Reflektoröffnung ist, wobei die Mittelachse des Lichtelements (7) zwischen dem Projektions- und Lichtmodul (1 und 4) hindurch verläuft.

6. Scheinwerfer nach einem der Ansprüche 1 bis 5, **dadurch gekennzeichnet, dass** der schalenförmige Kurvenlichtreflektor (6) mit einem äußeren Randbereich innerhalb einer in Lichtaustrittsrichtung liegenden Projektionsfläche eines Bauteils (10 oder 2) des Projektionsmoduls (1) angeordnet ist.

7. Scheinwerfer nach einem der Ansprüche 1 bis 6, **dadurch gekennzeichnet, dass** einer am Kurvenlichtereflektor (6) lösbar festgesetzten Fassungsaufnahme (15) für das Lichtelement (7) ein schalenförmiger Reflektor des Lichtmoduls (4) mit einem entgegen der Lichtaustrittsrichtung gerichteten Reflektorabschnitt zugewandt ist.

8. Scheinwerfer nach einem der Ansprüche 1 bis 7, **dadurch gekennzeichnet, dass** dem Lichtelement (7) ein Abdeckelement (16) zur Abschirmung von direkt aus dem Lichtelement (7) austretenden Lichtstrahlen zugeordnet ist.

9. Scheinwerfer nach einem der Ansprüche 1 bis 8, **dadurch gekennzeichnet, dass** das Projektionsmodul (1) um eine vertikale Achse (17) für dynamisches Kurvenlicht schwenkbar ist und der Kurvenlichtreflektor (6) für statisches Kurvenlicht dient, wobei statisches Kurvenlicht bei engen Kurvenradien dem dynamischen Kurvenlicht zuschaltbar ist.

10. Scheinwerfer nach einem der Ansprüche 1 bis 9, **dadurch gekennzeichnet, dass** Projektions- und Lichtmodul (1 und 4) von einem Abdeckrahmen (18) umgeben sind, der einen zwischen Kurvenlichtreflektor (6) und Lichtmodul (4) verlaufenden Steg (19) aufweist, der von der vorderen Seite des Scheinwerfers her gesehen so breit ausgeführt ist, dass er zumindest einen zum Lichtmodul (4) benachbarten Reflexionsabschnitt des Kurvenlichtreflektors (6) und einen Abschnitt der Aufnahme des Lichtelements (7) des Kurvenlichtreflektors (6) abschirmt.

## Claims

1. Headlight for vehicles, with a projection module (1), that comprises a reflector (2) and a lens (3) disposed in the path of its radiation, with a light module (4) disposed laterally in relation to the projection module (1), in relation to the light outlet face (5) of which the lens (3) is shifted towards the back of the headlight, and with a cup-shaped curve-illumination reflector (6), **characterized in that**
- the cup-shaped curve-illumination reflector is disposed between the projection module (1) and the light module (4);
- the cup-shaped curve-illumination reflector (6) has an uptake means (8), for a light element (7), that lies closer to a component (10) of the projection module (1) than to the light outlet face (5) of the light module (4),
- the cup-shaped curve-illumination reflector (6) faces, with a first rim section (9) of its reflection surface, towards the front end area of the projection module (1) that takes up the lens (3) and, with a second rim section (23) of its reflection surface, faces in the direction of the light as it leaves the headlight.

2. Headlight in accordance with claim 1, **characterized in that** the viewing axis (12) of the curve-illumination reflector (6) runs at an acute angle (α) to the viewing axis (13) of the projection module (1) and between the light outlet surface (5) of the light module (4) and the projection module (1).

3. Headlight in accordance with claims 1 or 2, **characterized in that** the projection module (1) with the component (10) adjacent to the lens (3) has a recess (11) of the curve-illumination reflector (6) associated with it.

4. Headlight in accordance with one of claims 1 to 3, **characterized in that** there is an arched gap between the outer rim area of the curve-illumination reflector (6) and the component (10) of the projection module (1).

5. Headlight in accordance with one of claims 1 to 4, **characterized in that** the uptake means (8) of the curve-illumination reflector (6) is a reflector opening, whereby the central axis of the light element (7) runs through between the projection module (1) and the light module (4).

6. Headlight in accordance with one of claims 1 to 5, **characterized in that** the cup-shaped curve-illumination reflector (6) is disposed, with an outer rim area, within a projection surface, of a component (10 or 2) of the projection module (1), lying in the direction of issuing of the light.

7. Headlight in accordance with one of claims 1 to 6, **characterized in that** an attachment uptake means, for the light element (7), which is fixed such that it can be released, to the curve-illumination reflector (6), faces, with a reflector section that is aligned in the opposite direction to the issuing of light, a cup-shaped reflector of the light module (4).

8. Headlight in accordance with one of claims 1 to 7, **characterized in that** the light element (7) has a cover element (16), for screening from direct light radiation coming from the light element (7), associated with it.

9. Headlight in accordance with one of claims 1 to 8, **characterized in that** the projection module (1) can swivel around a vertical axis (17) for dynamic illumination on curves, and **in that** the curve-illumination reflector (6) serves for stationery illumination on curves, whereby stationery illumination on curves can be changed over to dynamic illumination on curves when tight curves are travelled round.

10. Headlight in accordance with one of claims 1 to 9, **characterized in that** the projection module (1) and the light module (4) are surrounded by a cover frame (18) that has a crosspiece (19) running between the curve-illumination reflector (6) and the light module (4), the said crosspiece being, as seen from the front side of the headlight, of a width whereby it at least screens a reflection section, of the curve-illumination reflector (6), next to the light module (4), and a section of the uptake means of the light element (7) of the curve-illumination reflector (6).

## Revendications

1. Phare pour véhicules, comportant un module de projection (1) qui comprend un réflecteur (2) et une lentille (3) agencée dans sa trajectoire de faisceau, comportant un module lumineux (4) agencé à côté du module de projection (1), la lentille étant agencée en décalage en retrait par rapport à la face arrière du phare vers la surface de sortie de lumière (5) du module lumineux, et comportant un réflecteur de feu de virage (6) en forme de coque, **caractérisé en ce que**
- le réflecteur de feu de virage (6) en forme de coque est agencé entre le module de projection (1) et le module lumineux (4),
le réflecteur de feu de virage (6) en forme de coque présente pour un élément lumineux (7) un logement (8) qui est plus proche d'un composant (10), voisin de la lentille (3), du module de projection (1) que de la surface de sortie de lumière (5) du module lumineux (4),
- le réflecteur de feu de virage (6) en forme de coque est tourné avec son premier tronçon de bord (9) de sa surface de réflexion vers la région terminale antérieure recevant la lentille (3), du module de projection (1), et avec un deuxième tronçon de bord (23) de sa surface de réflexion en direction de sortie de lumière du module lumineux (4).

2. Phare selon la revendication 1, **caractérisé en ce que** l'axe optique (12) du réflecteur de feu de virage (6) s'étend sous un angle aigu (α) par rapport à l'axe optique (13) du module de projection (1) et entre la surface de sortie de lumière (5) du module lumineux (4) et le module de projection (1).

3. Phare selon la revendication 1 ou 2, **caractérisé en ce que** le module de projection (1) est associé, avec le composant (10) voisin de la lentille (3), à un renfoncement (11) du réflecteur de feu de virage (6).

4. Phare selon l'une des revendications 1 à 3, **caractérisé en ce que**, entre la région de bord extérieur du réflecteur de feu de virage (6) et le composant (10) du module de projection (1), se trouve une fente en forme d'arc.

5. Phare selon l'une des revendications 1 à 4, **caractérisé en ce que** le logement (8) du réflecteur de feu de virage (6) est une ouverture de réflecteur, l'axe médian de l'élément lumineux (7) s'étendant entre le module de projection (1) et le module lumineux (4).

6. Phare selon l'une des revendications 1 à 5, **caractérisé en ce que** le réflecteur de feu de virage (6) en forme de coque est agencé avec une région de bord extérieure à l'intérieur d'une surface de projection, située en direction de sortie de lumière, d'un composant (10 ou 2) du module de projection (1).

7. Phare selon l'une des revendications 1 à 6, **caractérisé en ce qu'**un réflecteur en forme de coque du module lumineux (4) avec un tronçon de réflecteur orienté à l'encontre de la direction de sortie de lumière est tourné vers un logement de douille (15), fixé de manière détachable sur le réflecteur de feu de virage (6) en forme de coque, pour l'élément lumineux (7).

8. Phare selon l'une des revendications 1 à 7, **caractérisé en ce qu'**à l'élément lumineux (7) est associé un élément de recouvrement (16) pour réaliser une protection envers les rayons lumineux sortant directement de l'élément lumineux (7).

9. Phare selon l'une des revendications 1 à 8, **caractérisé en que** le module de projection (1) peut pivoter autour d'un axe vertical (17) pour un feu de virage dynamique et le réflecteur de feu de virage (6) sert à un feu de virage statique, le feu de virage statique pouvant être commuté en plus du feu de virage dynamique en cas de rayons de virage serré.

10. Phare selon l'une des revendications 1 à 9, **caractérisé en ce que** le module de projection (1) et le module lumineux (4) sont entourés par un cadre de recouvrement (18) qui présente une entretoise (19) s'étendant entre le réflecteur de feu de virage (6) et le module lumineux (4), laquelle, vue depuis la face antérieure du phare, est réalisée si large qu'elle protège au moins un tronçon de réflexion, voisin du module lumineux (4), du réflecteur de feu de virage (6) et un tronçon du logement de l'élément lumineux (7) du réflecteur de feu de virage (6).
